# EUROPEAN PATENT SPECIFICATION

(11) **EP 2 085 755 B1**
(45) Date of publication and mention of the grant of the patent: **01.08.2012**
(21) Application number: 09151045.3
(22) Date of filing: 21.01.2009
(51) Int. Cl.: G01H 1/00, G01H 11/08, B25D 11/00

(54) **Power Tool having Motor Speed Monitor**
Elektrisches Werkzeug mit Motorgeschwindigkeitsmonitor
Outil motorisé avec un moniteur de vitesse du moteur

(30) Priority: 01.02.2008 GB 0801868
(43) Date of publication of application: 05.08.2009
(73) Proprietor: Black & Decker, Inc., Newark, DE 19711 (US)
(72) Inventor: Gumpert, Rene, 61137 Schoeneck (DE)
(74) Representative: Bell, Ian Stephen

(56) References cited:
- EP-A- 1 502 710
- DE-A1- 10 361 225
- DE-A1- 19 938 319
- US-A1- 2004 079 173

## Description

The present invention relates to portable power tools, and relates particularly to a portable power tool having means for detecting and controlling the speed of rotation of the motor of the portable power tool.

Power tools such as hammer drills are well known in the art and are generally provided with an electric motor driving a spindle for receiving the shank of a tool or bit such as a drill bit or a chisel bit. Such hammer drills comprise an impact mechanism that converts the rotational drive from the motor to a reciprocating drive causing a piston to reciprocate within the spindle. The piston reciprocatingly drives a ram by means of a closed air cushion located between the piston and the ram, and the impacts from the ram are then transmitted to the tool or bit of the hammer. The rotational movement of the motor and the reciprocating piston cause vibrations having various superimposed frequencies that are transmitted through and from the power tool.

Furthermore, it is also well known in the art that the cutting speed of the tool bit depends, inter alia, on the diameter of the tool bit, the appropriate rotational speed of the motor and the generated hammer frequency for a particular work material. Accordingly, prior art power tool are known to include motor speed control knobs which can be manually adjusted by an operator to set the speed of motor and/or hammer frequency to the recommended speed for a given tool bit diameter and/or work material. When the power tool is in use, the resistance of the work material to the cutting action of the tool bit varies, which can cause unpredictable variations of the rotational speed of the motor and therefore affect the efficiency of the power tool. Also, overheating of the motor during operation can occur if the tool encounters excessive resistance.

EP1502710 discloses a hammer drill with the features of the preamble of claim 1 which comprises a control mechanism which changes the rotational speed of the driving motor during the cycle of the reciprocating movement of the driver.

It is an object of the present invention to provide a portable power tool having means for automatically determining and controlling the rotational speed of the motor during operation.

According to the present invention there is provided a power tool as claimed in claim 1.

By providing a signal processor for receiving the vibration signal from the vibration transducer, determining the rotational speed of the motor based on the vibration signal, and providing an output signal to the controller to cause the controller to control the rotational speed of the motor, this provides the advantage of enabling the rotational speed of the motor to be kept relatively constant, irrespective of the resistance caused by the work material during operation. This maximises, for example, the cutting efficiency of the power tool, and enables the motor to be protected from overheating.

This further provides the advantage of facilitating the selection process to find the frequency component that can be used to determine the rotational speed of the motor, for example by simply (i) selecting a frequency component with the highest amplitude and/or (ii) selecting a frequency component within a specific frequency range known from the manually selected speed settings of the power tool.

The controller and the signal processor may be integrated within a single electronic module.

This provides the advantage of saving space within the housing of the power tool and reducing the complexity and cost of manufacture.

The signal processor may be adapted to enhance and/or isolate a component of the vibration signal caused by the rotation of the motor.

This provides the advantage of minimizing false readings by improving the selectivity and quality of the vibration signal of interest, e.g. the signal caused by radial vibration of the motor.

The signal processor may be adapted to provide an output signal determined according to the difference between the determined rotational speed and a preselected target rotational speed of the motor.

The vibration transducer may be mounted on the body adjacent to the motor.

US2004/0079173 discloses a method and system for measuring and reducing the torque ripple of a motor.

The vibration transducer may be adapted to detect radial vibrations caused by the motor.

The vibration transducer may include at least one piezo-electric sensor.

An embodiment of the present invention will now be described, by way of example only and not in any limitative sense, with reference to the accompanying drawings in which:
Figure 1 shows a cross-sectional side view of a hammer drill embodying the present invention;
Figure 2 shows a graph of a typical vibration signal received from the vibration transducer of Figure 1;
Figure 3 shows a graph of the Fourier Transform (amplitude vs. frequency) of the vibration signal shown in Figure 2; and
Figure 4 shows flow process charts of the main-routine executed by the controller and the sub-routines soft-start and motor-control executed within the main-routine.

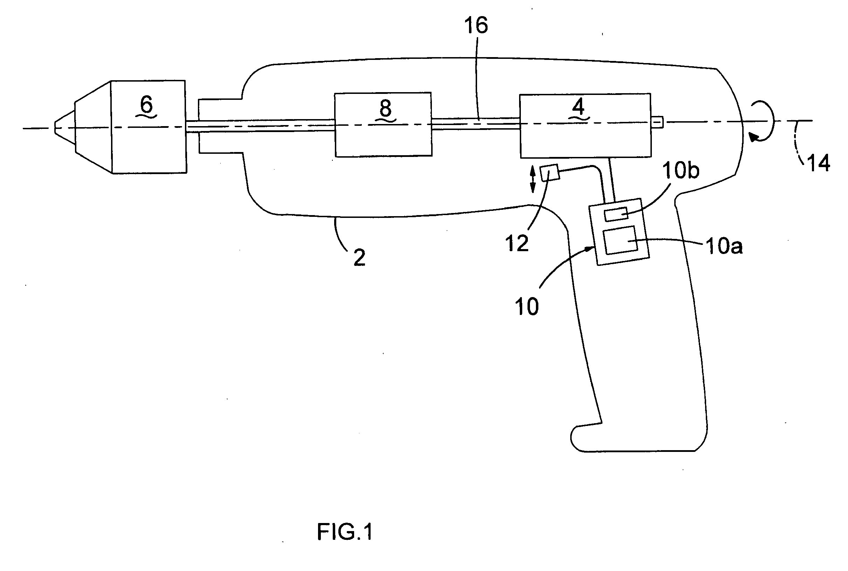

Referring to Figure 1, a hammer drill comprises a body 2 in which is mounted a motor 4. The motor 4 rotatingly drives a chuck 6, for receiving a drill bit (not shown), via a gearbox 8. The rotational speed of the motor 4 is controlled by an electronic module 10 comprising a controller 10a and a signal processor 10b, the function of which will be described in greater detail below.

A vibration transducer 12 is mounted on the body 2 near the motor 4 but not on the axis of rotation 14 of the spindle 16 of the motor 4. The vibration transducer 12 can be any type of sensor, for example, a piezo-electric sensor, but must be capable of detecting vibrations over a range of frequencies. The vibration transducer 12 measures the amplitude of the vibration caused by the motor 4 in a radial direction from the axis of rotation 14 of the spindle 16.

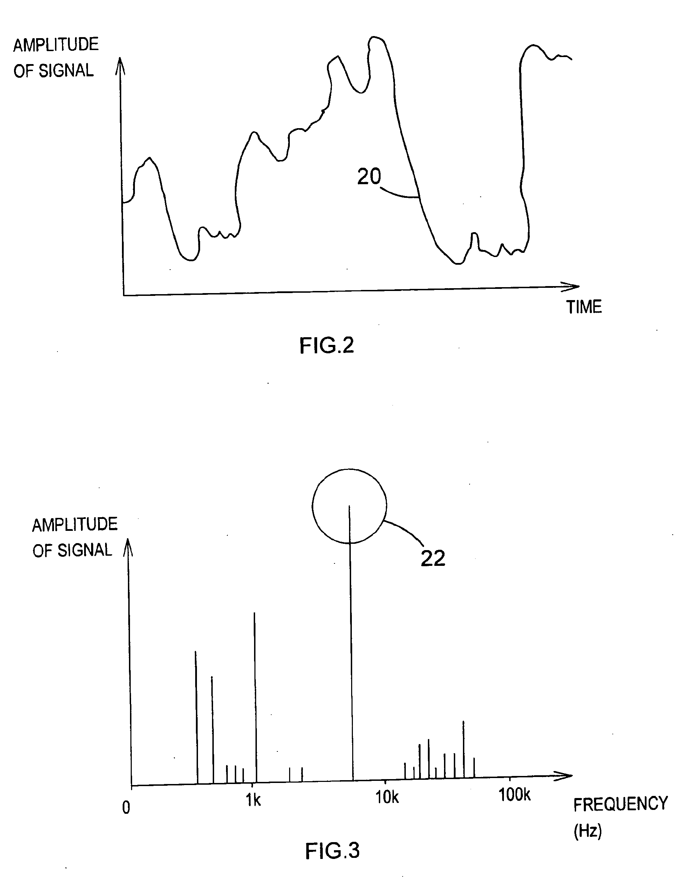

Figure 2 shows a graph of a typical vibration signal 20 produced by the vibration transducer 12 when the hammer drill is operating, the graph showing amplitude versus time. The vibration signal 20 generally represents vibrations from many sources from within the hammer drill. For example, vibration is generated by the rotation of the rotor of the motor 4 due to imperfectly rotationally symmetrical alignment of the rotor with motor rotational axis 14. Other vibrations may be caused by the gears 8 and rotation of the spindle 6 or by the reciprocating drive of the impact mechanism. The vibration signal 20 is then fed into the signal processor 10b of the electronic module 10.

Figure 3 shows a graph of a frequency spectrum (amplitude vs. frequency) provided by the signal processor 10b by applying a Fourier Transform algorithm to the vibration signal 20 of Figure 2 in order to isolate the various frequencies of the vibration signal 20. For example, the vibration caused by the imperfectly symmetrical rotation of the armature of the motor 4 causes a spike 22 (frequency component) as shown in the graph of Figure 3, i.e. it generates a vibration of relatively large amplitude at a particular frequency. The resulting signal at the particular frequency of the spike 22 is then filtered to enhance and/or isolate the component of the vibration signal 20 or, at least, enhance the major component of the vibration signal 20 caused by the motor 4.

The frequency of the vibration caused by the motor 4 is directly proportional to the rotational speed of the motor 4. As such, determining the frequency will enable the rotational speed of the motor 4 to be calculated. If, for example, the rotational speed of the motor 4 increases, the frequency of the vibration increases. Similarly, if the rotational speed of the motor 4 decreases, the frequency of the vibration decreases. Thus, by measuring the frequency component of the rotational movement of the motor 4, the signal processor 10b can determine the rotational speed of the motor 4 and provide an output signal, based on the difference between the determined rotational speed and a pre-selected target speed, for the controller 10a in order to automatically adjust the rotational speed of the motor 4.

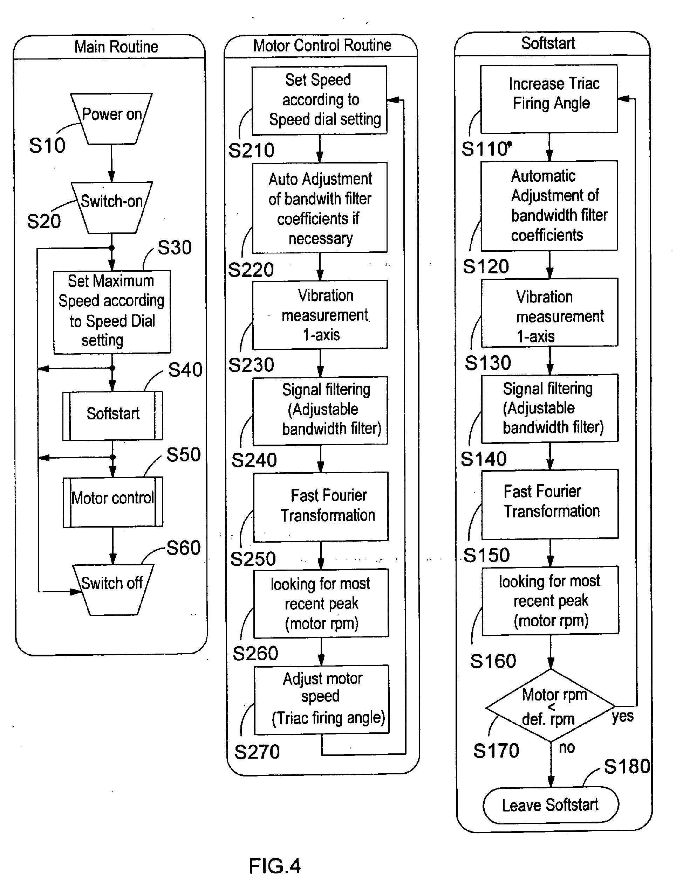

Figure 4 shows a flow process chart of the main-routine executed by the electronic module 10 during operation of the power tool. A detailed description of the main routine and its sub-routines (i) soft-start and (ii) motor-control is given below:

Within the main-routine, the operator first ensures that power is provided by plugging in the power tool at step S10 and manually switches on the power tool by pressing the switch-on button at step S20. The controller 10a will then set the maximum rotational speed of the motor 4 according to the speed dial setting at step S30 and start the soft-start sub-routine at step S40 to protect the motor from damage by gradually increasing the motor speed until reaching the target rotational speed of the motor 4. The rotational speed of the motor 4 is then maintained by the motor-control subroutine at step S50 by constantly monitoring and adjusting the rotational speed of the motor 4 until the operator manually switches off the power tool at step S60.

Within the soft-start sub-routine of step S40, the firing angle of a triac (not shown) provided within or controlled by the controller 10a is increased at step S110 and a bandwidth filter in the processor 10b is adjusted automatically at step S120. The vibration transducer 12 measures the vibration of the motor 4 at step S130 and provides the vibration signal 20 to the signal processor 10b, where the vibration signal 20 is, for example, filtered using an adjustable bandwidth filter at step S140. A frequency spectrum of the vibration signal 20 is generated by means of a Fast Fourier Transformation at step S150 and the most recent frequency spike caused by the rotational movement of the motor 4 is selected at step S160 according to, for example, the amplitude, in order to determine the instantaneous rotational speed of the motor 4 which is then compared at step S170 to a target rotational speed of the motor 4. As long as the current rotational speed is smaller than the target rotational speed of the motor 4, the soft-start routine returns to step S110 and is repeated using an increased Triac firing angle with each iteration. When the target rotational speed of the motor 4 is reached, the soft-start routine is terminated at step S180 and the motor-control routine of step S50 is started at step S210.

Within the motor-control routine, the rotational speed of the motor 4 is adjusted according to the speed dial setting at step S210 and the bandwidth filter coefficient is adjusted automatically, if necessary, at step S220. The vibration transducer 12 measures the vibration of the motor 4 at step S230 and provides the vibration signal 20 to the signal processor 10b, where the vibration signal 20 is, for example, filtered using an adjustable bandwidth filter at step S240. A frequency spectrum of the vibration signal 20 is generated at step S250 by means of a Fast Fourier Transformation and the most recent frequency spike caused by the rotational movement of the motor 4 is selected at step S260 according to, for example, the amplitude, in order to determine the instantaneous rotational speed of the motor 4 which is then compared to the target rotational speed of the motor 4. The rotational speed of the motor 4 is then adjusted, if necessary, at step S270 and the motor-control routine is repeated until the operator manually switches off the power tool.

It will be appreciated by persons skilled in the art that the above embodiment has been described by way of example only and not in any limitative sense, and that various alterations and modifications are possible without departing from the scope of the invention as defined by the appended claims.

## Claims

1. A portable power tool comprising:
a housing (2);
an electric motor (4) within the housing (2) for driving an output (6) of the tool;
and
a controller (10a) for controlling the rotational speed of the motor (4); and **characterised in that** there is further provided a vibration transducer (12) for sensing vibrations generated by the motor (4) and producing a vibration signal dependent upon the sensed vibrations;
a signal processor (10b) which receives the vibration signal (20) from the vibration transducer (12);
produces a frequency spectrum from said vibration signal (20);
selects at least one frequency component (22) according to amplitude and/or frequency;
determines the rotational speed of the motor from the frequency of the selected frequency component;
and provides an output signal to the controller (10a) to cause the controller (10a) to control the rotational speed of the motor (4).

2. A portable power tool according to claim 1, wherein said controller (10a) and said signal processor (10b) are integrated within a single electronic module.

3. A portable power tool according to any one of the preceding claims, wherein said signal processor (10b) enhances and/or isolates a component of the vibration signal (20) caused by the rotation of said motor (4).

4. A portable power tool according to any one of the preceding claims, wherein said signal processor (10b) provides an output signal determined according to the difference between said rotational speed and a predetermined target rotational speed of said motor (4).

5. A portable power tool according to any one of the preceding claims, wherein said power tool is a hammer drill.

6. A portable power tool according to any one of the preceding claims, wherein said vibration transducer (12) is mounted on the housing (2) adjacent to the motor (4).

7. A portable power tool according to any one of the preceding claims, wherein said vibration transducer (12) includes at least one piezo-electric sensor.

8. A portable power tool according to any one of the previous claims wherein the vibration transducer (12) measures the amplitude of vibration caused by the motor (4) in a radial direction from an axis of rotation (14) of a spindle (16) of the motor (4).

## Patentansprüche

1. Tragbares Elektrowerkzeug, umfassend:
ein Gehäuse (2);
einen Elektromotor (4) innerhalb des Gehäuses (2) für den Antrieb eines Ausgangs (6) des Werkzeugs; und
einen Regler (10a) zum Regeln der Drehzahl des Motors (4); und
**dadurch gekennzeichnet, dass** ferner ein Schwingungswandler (12) zum Erfassen von Schwingungen, die vom Motor (4) erzeugt werden, und zum Erzeugen eines Schwingungssignals vorgesehen ist, das von den erfassten Schwingungen abhängt;
einen Signalprozessor (10b), der das Schwingungssignal (20) vom Schwingungswandler (12) erhält;
ein Frequenzspektrum vom Schwingungssignal (20) erzeugt;
wenigstens eine Frequenzkomponente (22) gemäß der Amplitude und/oder Frequenz auswählt;
die Drehzahl des Motors von der Frequenz der gewählten Frequenzkomponente ermittelt;
und ein Ausgangssignal an den Regler (10a) abgibt, um den Regler (10a) zum Regeln der Drehzahl des Motors (4) zu veranlassen.

2. Tragbares Elektrowerkzeug nach Anspruch 1, wobei der Regler (10a) und der Signalprozessor (10b) in ein einzelnes Elektronikmodul integriert sind.

3. Tragbares Elektrowerkzeug nach einem der vorhergehenden Ansprüche, wobei der Signalprozessor (10b) eine Komponente des Schwingungssignals (20), das von der Drehung des Motors (4) verursacht wird, erhöht und/oder isoliert.

4. Tragbares Elektrowerkzeug nach einem der vorhergehenden Ansprüche, wobei der Signalprozessor (10b) ein Ausgangssignal abgibt, das gemäß der Differenz zwischen der Drehzahl und einem vorausbestimmten Drehzahl-Zielwert des Motors (4) ermittelt wird.

5. Tragbares Elektrowerkzeug nach einem der vorhergehenden Ansprüche, wobei das Elektrowerkzeug ein Bohrhammer ist.

6. Tragbares Elektrowerkzeug nach einem der vorhergehenden Ansprüche, wobei der Schwingungswandler (12) am Gehäuse (2) angrenzend zum Motor (4) angebracht ist.

7. Tragbares Elektrowerkzeug nach einem der vorhergehenden Ansprüche, wobei der Schwingungswandler (12) wenigstens einen piezoelektrischen Sensor umfasst.

8. Tragbares Elektrowerkzeug nach einem der vorhergehenden Ansprüche, wobei der Schwingungswandler (12) die Amplitude der Schwingung misst, die vom Motor (4) in einer radialen Richtung ausgehend von einer Drehachse (14) einer Spindel (16) des Motors (4) verursacht wird.

## Revendications

1. Outil motorisé portable comprenant :
un boîtier (2) ;
un moteur électrique (4) dans le boîtier (2) destiné à actionner une sortie (6) de l'outil ; et
un moniteur (10a) destiné à contrôler la vitesse de rotation du moteur (4) ; et
**caractérisé en ce qu'**il est en outre prévu un transducteur de vibrations (12) servant à détecter les vibrations générées par le moteur (4) et à produire un signal de vibration selon les vibrations détectées ;
un dispositif de traitement de signaux (10b) qui reçoit le signal de vibration (20) du transducteur de vibration (12) ;
produit un spectre de fréquence à partir dudit signal de vibration (20) ;
sélectionne au moins un composant de fréquence (22) selon l'amplitude et/ou la fréquence ;
détermine la vitesse de rotation du moteur à partir de la fréquence du composant de fréquence sélectionné ;
et fournit un signal de sortie au moniteur (10a) pour faire en sorte que le moniteur (10a) contrôle la vitesse de rotation du moteur (4).

2. Outil motorisé portable selon la revendication 1, dans lequel ledit moniteur (10a) et ledit dispositif de traitement de signaux (10b) sont intégrés dans un seul module électronique.

3. Outil motorisé portable selon l'une quelconque des revendications précédentes, dans lequel ledit dispositif de traitement de signaux (10b) augmente et/ou isole une composante du signal de vibration (20) causé par la rotation dudit moteur (4).

4. Outil motorisé portable selon l'une quelconque des revendications précédentes, dans lequel ledit dispositif de traitement de signaux (10b) fournit un signal de sortie déterminé selon la différence entre ladite vitesse de rotation et une vitesse de rotation cible prédéterminée dudit moteur (4).

5. Outil motorisé portable selon l'une quelconque des revendications précédentes, dans lequel ledit outil motorisé est un marteau perforateur.

6. Outil motorisé portable selon l'une quelconque des revendications précédentes, dans lequel ledit transducteur de vibrations (12) est monté sur le boîtier (2) à côté du moteur (4).

7. Outil motorisé portable selon l'une quelconque des revendications précédentes, dans lequel ledit transducteur de vibrations (12) comprend au moins un capteur piézoélectrique.

8. Outil motorisé portable selon l'une quelconque des revendications précédentes, dans lequel le transducteur de vibrations (12) mesure l'amplitude de vibration causée par le moteur (4) dans une direction radiale depuis un axe de rotation (14) d'une broche (16) du moteur (4).
